# EUROPEAN PATENT APPLICATION

(11) **EP 4 726 529 A1**
(43) Date of publication of application: **15.04.2026**
(21) Application number: 25206101.5
(22) Date of filing: 01.10.2025
(51) Int. Cl.: G06F 7/24

(54) **LOW-POWER DIGITAL SORTING**

(30) Priority: 11.10.2024 EP 24206021
(71) Applicant: EM Microelectronic-Marin SA, 2074 Marin-Epagnier (CH)
(72) Inventor: FIRLIT, Thaddeus, Colorado Springs, 80909 (US); MOORE, Brian, Colorado Springs, 80919 (US)
(74) Representative: ICB SA

(57) **Abstract**

The present invention concerns an electronic circuit (5) and a method of sorting data elements provided in a memory array (20), wherein the memory array (20) comprises a number of memory areas (21, 22, 23, 24), each of which configured to store a data element (11, 12, 13, 14), the method comprises the steps of:
- assigning a comparison counter (31, 32, 33, 34) to each data element (11, 12, 13, 14),
- comparing a first data element (11) stored in a first memory area (21) with all further data elements (12, 13, 14) stored in the number of memory areas (22, 23),
- incrementing a counter value of the comparison counter (31) of the first data element (11) if the comparison of the first data element (11) with any one of the further data elements (12, 13, 14) matches a predefined comparison condition, else incrementing the comparison counter of the other data element,
- concurrently or sequentially comparing further data elements (12, 13...) with all subsequent data elements (13, 14...), and incrementing each associated counter value upon the success of the comparisons, in this way the counter value of all comparison counters (31, 32, 33, 34) of the respective data elements (11, 12, 13, 14) reflects the size of each data element of the memory array (20), in which respective data elements are actually stored, and
- sorting the data elements (11, 12, 13, 14) on the basis of the comparison counters (31, 32, 33, 34).

## Description

### Field of the invention

The present invention relates to the field of sorting data provided in a digital memory, e.g. in a memory array. In some aspects the present invention relates to a method of sorting data element provided in a memory array. In further aspects the present invention relates to an electronic circuit for sorting data elements. In another aspect the present invention relates to a computer program product to execute a sorting routine or sorting method.

### Background of the invention

A typical digital sorting operation of a number of data words (from high value to low value, or vice-versa) requires multiple clock cycles and multiple register bit changes to accomplish the sort operation. The power consumption of each digital sort operation is proportional to the number of register bits which undergo a state change during the sort operation. Furthermore, during any sort operation, the activity of bit changes (switching bits, or SB) can be calculated simply by the number-of-clocks-per-sort times the number-of-possible-register-bit-changes-per-clock. For example, a bubble-sort of 4 words of 16-bits each requires 4 clocks x 4 word swaps x 16 bits per word = 256 SB.

It is therefore desirable to provide an efficient method of sorting data elements provided in a memory array of a digital memory, which requires less switching bits per sort operation and which enables a rather fast and reliable sorting with a minimum of energy consumption.

### Summary of the invention

In one aspect the present invention relates to a method of sorting data elements provided in a memory array. The memory array comprises a number of memory areas, each of which is configured to store a data element. The method comprises the steps of assigning a comparison counter to each data element, comparing a first data element stored in a first memory area with all further data elements stored in the number of memory areas. As a result of the comparison of the first data element (x) with another data element (y) there is incremented a counter value of the comparison counter of the first data element if the comparison of the first data element with any one of the further data elements matches a predefined comparison condition. If the comparison condition is not met, the comparison counter associated with the (y) data element is incremented. Typically, and when comparing the first data element with any one of the residual or remaining data elements, every time the predefined comparison condition is met the comparison counter is incremented.

Thereafter and on the basis of the comparison counters of all data elements, the data elements are sorted.

One example of a predefined comparison condition is a comparison if the first data element is larger than the second data element or any further data element. If the first data element is larger it "wins" over another data element and accordingly the comparison counter is incremented by an increment.

If the first data element is smaller than a second data element or each further data element, the counter value of the comparison counter of the first data element will not be changed, but the comparison counter of the other data element will be incremented. In situations where the first data element equals a second or any further data element the counter value of the comparison counter of the respective first data element should remain unamended, but the latter comparison counter should be incremented, to avoid a tie in the final counter values, and support only one counter with a final result of zero.

In this way and by comparing the first data element with all other data elements the value of the comparison counter will be indicative of the number of times the first data element is larger than any further data element. Moreover, in this way the counter value of the comparison counters 31, 32, 33, 34 of the respective data elements 11, 12, 13, 14 reflects the size of each data element of the memory array, in which respective data elements are actually stored. More specifically, in this way the counter value of the comparison counters 31, 32, 33, 34 of the respective data elements 11, 12, 13, 14 reflects the size of each data element of the memory array without the necessity to actually swap the memory area(s), in which respective data elements are actually stored. That is to say It can be noted that during the sort operation, the data elements of the memory array are not relocated but instead a comparatively small footprint of switching bits is applied by changing the comparison counter index number which addresses the data elements in an ascending or descending order.

Typically, the method of sorting and hence the comparison between data element is not limited to comparing only the first data element with all other data elements. Rather, the second data element is to be compared at least with the third and any further data elements of the memory array.

Accordingly, also the third data element stored in the third memory area is to be compared with the fourth and all further data elements and so on. In this way, the counter value of the comparison counters of the respective data elements reflects the size of each data element of the memory array without the necessity to actually swap the memory area(s), in which respective data elements are actually stored. In this way the data elements of the memory array are not relocated during the comparison but instead a comparatively small footprint of switching bits is applied by using the comparison counter index number which addresses the data elements in an ascending or descending order.

By this approach an increase in hardware design logic may be required to accommodate the index tracking. But, the present approach offers a beneficial and reduced power trade-off for power limited applications.

According to a further example the method further comprises the steps of comparing a second data element stored in a second memory area with all remaining data elements. Here, a comparison with all residual data elements means at least a comparison of the second data element with the third data element, with the fourth data element and so on. With the second data element a comparison with all remaining or residual data elements will not require a comparison with the first data element because the first data element has been already compared with the second data element when comparing the first data element with all further data elements stored in the number of memory areas.

After or during comparing the second data element stored in the second memory area with all residual data elements the counter value of the comparison counter of the second data element is incremented every time, when the comparison of the second data element with any one of the residual data elements matches the predefined comparison condition.

In this way and in the same manner as described above in connection with the first data element, also the counter value of the comparison counter of the second data element will be directly indicative of a ranking of the second data element among all data elements with respect to the predefined comparison condition.

Of course, the comparison condition is always the same when comparing the first data element with all further data elements as well as when comparing the second data element with all residual data elements, and so on.

According to a further example the method comprises the steps of comparing also the third data element and all further data elements stored in a third memory area or stored in further memory areas with all other data elements and/or with all remaining data elements.

Concurrently or subsequently after conducting the comparison the counter values of the comparison counter of the respective third data element and/or of the further data elements is incremented or increased when the predefined comparison condition is met. Here, the further memory areas and the further comparisons with the remaining data elements simply reflect the total number of data elements in the memory areas of the memory array. The total number of memory areas and the number of data elements each of which being stored in one of the memory areas represents the depth of the data elements.

According to a further example the data elements are selected either in an ascending or descending order on the basis of the comparison counters of the respective data elements. The data elements of all memory areas are mutually compared and the counter values of the comparison counters associated to the respective data elements are incremented when the predefined comparison condition has been met.

In this way, the counter values of the comparison counters, each of which being assigned with exactly one data element stored in one of the memory areas, is directly indicative of the ranking or size of the respective data element compared to all other data elements.

According to a further example sorting the data elements on the basis of the comparison counter includes selecting the comparison counters in an ascending or descending order of their respective counter value. If the data elements should be sorted in an ascending order the smallest comparison counter, e.g. a comparison counter of zero may be selected and that particular data element associated to this selected comparison counter will be collected or retrieved from the memory array as the smallest data element of all data elements. Thereafter, a subsequent data element will be selected that is associated with a comparison counter value that equals one. Thereafter the data element will be selected, which is associated with the counter value of its associated comparison counter that equals 2 and so on.

In another example, the sorting may be easily changed to sort the data elements in a descending order. Here, the steps of mutually comparing the data elements and indexing with the counter index may be left unchanged. It may be only required to modify the way the data elements associated with the comparison counters are selected. Hence, for providing a sorting of n data elements, the selection may start with the largest counter value (n-1) of a comparison counter and may continue with decrementing counter values of (n-2, n-3, ....).

It may be only upon the consecutive selection of data elements on the basis of the associated comparison counters that respective data elements are read from the data array and will be transferred into another memory array in a sorted manner.

According to a further example the predefined comparison condition is fulfilled when the first data element is larger than another data element. In this way, the counter value of the comparison counter is only incremented or increased when the data element associated to the respective comparison counter is larger than another data element stored in another memory area of the memory array.

According to a further example the predefined comparison condition is fulfilled when the first data element is smaller than another data element. In this way, the counter value of the comparison counter is only incremented or increased when the data element associated to the respective comparison counter is smaller than another data element stored in another memory area of the memory array.

According to a further example of the method of sorting data elements numerous data elements stored in numerous memory areas are mutually compared during a single clock cycle. In this way, the total time required for conducting the entire comparison or sorting of data elements can be reduced. Moreover, the number of comparisons per clock cycle can be increased.

In a further aspect the present invention further relates to an electronic circuit for sorting data elements. The electronic circuit comprises a memory array comprising a number of memory areas. Each of the memory areas is configured to store a data element. The electronic circuit further comprises an indexing array of comparison counters, wherein each comparison counter is assigned to a data element and/or to a respective memory area configured to store the respective data element.

The electronic circuit further comprises a comparator arrangement coupled to the memory area, coupled to the indexing array and being operable to compare each one of the data elements with all further data elements stored in the memory areas of the memory array. The electronic circuit further comprises a selecting arrangement, which is coupled to the indexing array and which is coupled to the memory array. The selecting arrangement is further operable to sort the data elements on the basis of the comparison counters.

The selecting arrangement may be configured to direct the data elements as stored in individual memory areas sequentially and to read the respective data elements in an ascending or descending order. It may be only then and by selecting the individual data elements from the memory areas that the data elements are read from the memory array and are forwarded or buffered in another memory in a sorted manner.

According to a further example the comparator arrangement comprises a number of comparators. Each one of the comparators is connected to the first memory area and is connected to one of the further memory areas. Hence, there may be provided a first number of comparators, wherein a first comparator of the first number of comparators is connected to the first memory area and to the second memory area. A second comparator of the first number of comparators may be connected to the first memory area and to the third memory area, and so on.

There may be provided also a second number of comparators, each of which connected to the second memory area and connected to one of the further memory areas of the memory array. Likewise, there may be provided a third number of comparators, each of which connected to the third memory area and connected to one of the further memory areas larger than the third memory area, and so on.

In this way and for conducting mutual comparisons between all data elements stored in the respective memory areas there may be provided a comparatively large number of comparators.

The invention presents a digital sort algorithm with minimal movement of data values. For example, and in order to accomplish a sort of 4 words of 16-bits each, using only 3 clocks x 4 possible bit changes = 12 SB, versus the 256 SB calculated for a bubble sort. In the targeted chip design, 20 parallel sort operations of pixel data are required, thus the power savings of the invention is substantial.

According to a further example the comparison counters are coupled to the comparator arrangement via an adding arrangement. Hence, the output of all comparators of the first number of comparators can be combined in a common adding arrangement.

Accordingly, there may be provided one adding arrangement for each comparison counter. In this way, each individual comparison conducted by the individual comparators can be added and hence combined so as to obtain a counter value for each comparison counter that reflects the number of comparisons in which the respective data element fulfilled the predefined comparison condition, e.g., the number of comparisons, for which the first data element has been larger than any other data element of the memory array.

According to another example the selecting arrangement of the electronic circuit comprises an array of selecting comparators. Each one of the selecting comparators is connected to one of the comparison counters and is further connected to a selecting input. By way of the selecting comparators there can be provided a counter value in an incrementing or decrementing order with the selecting input indicating or defining that particular counter value of a comparison counter and hence of an associated data element to be collected or retrieved from the memory array in a sorted manner. For instance, the first selecting comparator is connected to the first comparison counter and to the selecting input. A second selecting comparator is connected to the second comparison counter and to the selecting input. A third selecting comparator is connected to the third comparison counter and to the selecting input, and so on.

According to a further example the selecting arrangement comprises an array of logic gates, each of which comprising a first gate input and a second gate input. The first gate input of each logic gate is connected to an output of one of the selecting comparators. The second gate input of each logic gate is connected to one of the memory areas of the memory array. In some examples the logic gates may be implemented as a logic selector, wherein the first gate input, which is connected to the output of one of the selecting comparators is a control input and wherein the second gate input is a data input. When the first gate input is provided with a logical one, the input as obtainable from the memory area and connected to the second gate input is relayed or transferred to the output of the logic gate and hence to a sorted output of the electronic circuit.

In this way, and when the selecting input is provided with an ascending number of values, by way of the selecting comparators there will be elected or selected the respective comparison counters in an ascending or descending order based on the counter value of the comparison counters.

By way of the selecting arrangement and with the number of logic gates the data elements stored in the respective memory areas can be accordingly selected in an ascending or descending order thereby providing a sequence of data elements that are sorted in accordance to the predefined comparison condition. Furthermore, a single sort request, such as the highest value, lowest value or median value can easily be output.

According to a further example of the electronic circuit an output of each one of the logic gates of the selecting arrangement is connected to a sorted data output of the logic circuit via a number of logic gates. In this way, the individual outputs of the individual logic gates of the selecting arrangement can be parsed through the sorted data output of the electronic circuit.

According to further examples the electronic circuit as described herein is particularly configured and designed to execute or to conduct a method of sorting data elements as described above. Insofar, all features, effects and benefits as described above in connection with the method of sorting data elements equally apply to the electronic circuit; and vice versa.

According to a further example the electronic circuit comprises a controller, e.g. a microcontroller and/or a central processing unit also called a processing unit. The controller may operate or may include a clock generator on the basis of which the numerous comparisons, counter indexing and counter selections can be conducted.

Moreover, by way of the controller, the sorting algorithm conducted by the electronic circuit can be controlled, i.e. triggered, configured and stopped on demand.

According to another aspect the present invention also relates to a computer program product comprising a non-transitory computer readable storage medium having computer readable instructions that are executable by an electronic circuit, e.g. by a controller, a processing unit or processor of an electronic circuit, e.g. of an electronic circuit as described above. Here, the electronic circuit comprises a memory array comprising a number of memory areas, each of which being configured to store a data element.

The electronic circuit further comprises an array of comparison counters. When executed by the electronic circuit, e.g., when executed by the processor or processing unit of the electronic circuit the computer readable instructions cause the electronic circuit and/or the controller thereof to assign a comparison counter to each data element, to compare a first data element stored in a first memory area with all further data elements stored in the number of memory areas, and to increment a counter value of the comparison counter of the first data element if the comparison of the first data element with any one of the further data elements matches a predefined comparison condition, else incrementing the comparison counter of the other data element. The computer readable instructions further cause the electronic circuit to concurrently or sequentially compare further data elements with all subsequent data elements, and incrementing each associated counter value upon the success of the comparisons, in this way the counter value of all comparison counters of the respective data elements reflects the size of each data element of the memory array without the necessity to actually swap the memory area(s), in which respective data elements are actually stored, and also to sort the data elements on the basis of the comparison counters.

According to a further example, the computer readable instructions cause the electronic circuit to increment each remaining counter value of the comparison counter as each comparison of the associated data elements with all other data elements matches the predefined comparison condition.

According to a further example the computer readable instructions are executed by the electronic circuit and/or by the processing unit or the processor of the electronic circuit as described above. Moreover, the computer readable instructions may cause the electronic circuit as described above to conduct the method as described above. Insofar, all features, effects and benefits as described above in connection with the method of sorting data elements and/or with the electronic circuit for sorting data elements equally apply to the computer program product and the computer readable instructions; and vice versa.

According to further examples, any portion of the electronic circuit may be replaced by implementing the comparators, comparator counters or selection logic entirely using computer readable instructions plus accessible memory storage areas.

### Brief description of the drawings

In the following numerous examples of the invention will be described in greater detail by making reference to the drawings, in which:
- Fig. 1 is a partial illustration of an electronic circuit for sorting data elements,
- Fig. 2 shows a diagram of clock cycles versus a number of data elements to be sorted,
- Fig. 3 shows a diagram illustrating a number of switching bits per sorting operation versus the number of data elements to be sorted,
- Fig. 4 shows a further block diagram of the electronic circuit, and
- Fig. 5 is a flowchart of a method of sorting data elements.

### Detailed description of the invention

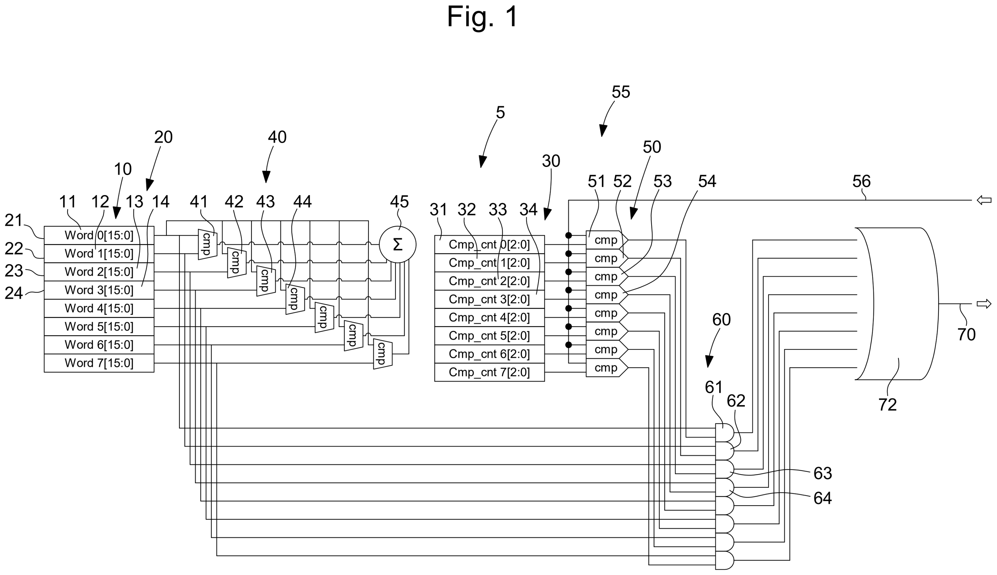

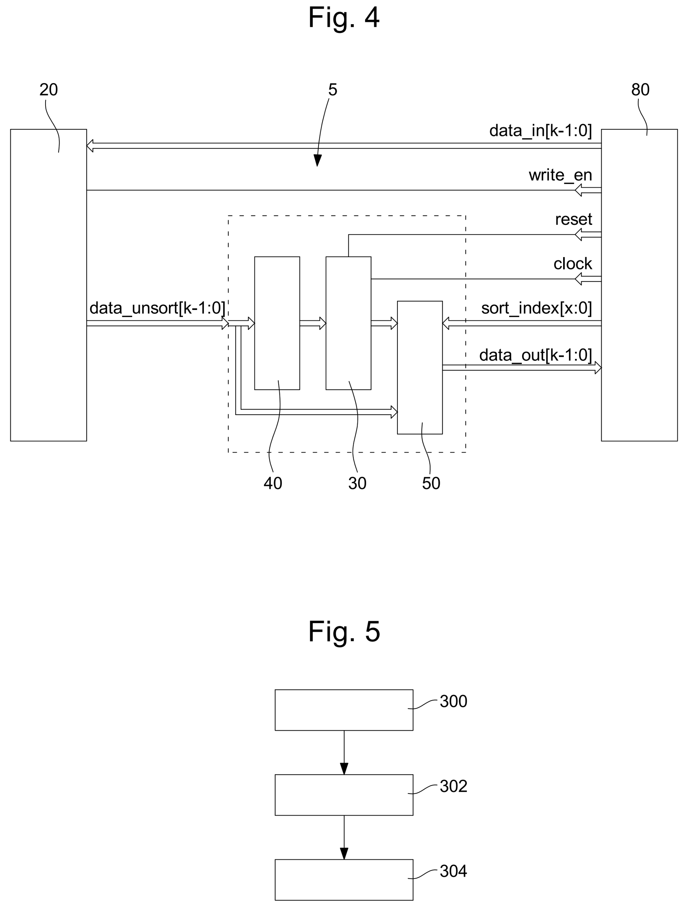

The electronic circuit 5 as indicated in Figs. 1 and 4 comprises a memory array 20 with numerous memory areas 21, 22, 23, 24. Each memory area 21, 22, 23, 24 is configured to store a data element 11, 12, 13, 14 with a given width. The data elements may comprise a word or any other predefined data structure. The memory area 21 is configured to store a first data element 11. The second memory area 22 is configured to store a second data element 12. The third memory area 23 is configured to store a third data element and so on, i.e., a fourth and any further memory area 24 is configured to store a fourth or further data element 14.

There is further provided a comparator arrangement 40, only parts of which being illustrated in Fig. 1. The comparator arrangement 40 comprises a number of comparators 41, 42, 43, 44 exclusively configured for the first memory area 21. Here, in the present illustration of Fig. 1 there is only illustrated the first number of individual comparators 41, 42, 43, 44 that are coupled or connected to the first memory area 21 of the memory array 20. Here, the first comparator 41 is connected to the first memory area 21 and to the second memory area 22. A second comparator 42 is connected to the first memory area 21 and to the third memory area 23. A third comparator 43 is connected to the first memory area 21 and to the fourth memory area 24, and so on. Hence, a further or fourth comparator 44 is connected to the first memory area 21 and to a fifth or further memory area.

Each comparator 41, 42, 43, 44 comprises an output. The output of each comparator 41, 42, 43, 44 will be at a logical 1 when a predefined comparison condition between the first data element 11 and a further data 12, 13, 14 element is met. In some examples, the predefined comparison condition may be defined in that the data element 11 stored in the first memory area 21 is larger than any of the other data elements 12, 13, 14 stored in the further memory areas 22, 23, 24. The outputs of each comparator 41, 42, 43, 44 will be combined in an adder or adding arrangement 45 the output of which being connected to a first comparison counter 31 of an indexing array 30.

In this way, and by the individual comparisons conducted by the number of comparators 41, 42, 43, 44 and by adding the number of comparisons, in which the predefined comparison condition has been met, a counter value of the respective comparison counter 31 will automatically reflect the number of matches of the predefined comparison condition for all comparisons of the first data element 11 with all further data elements 12, 13, 14. In this way and when the comparison condition is met, the counter value of the comparison counter 31 is incremented. As a consequence and after conducting a comparison between all data in amended 11, 12, 13, 14 of the data array 10 the counter values of the comparison counters 31, 32, 33, 34 is indicative of how often the respective element 11, 12, 13, 14 is larger than any other data element 11, 12, 13, 14.

Even though not illustrated the electronic circuit 5 further comprises a second number of comparators, wherein a first comparator of the second number of comparators is connected to the second memory area 22 and to the third memory area 23. A second comparator of the second number of comparators is connected to the third memory area 23 and to the fourth memory area 24, and so on. The outputs of all comparators of the second number of comparators is likewise combined in a second adder, the output of which is connected to the second comparison counter 32 of the indexing array 30. The second adder furthermore accumulates the comparison performed during the first number of comparisons where the second memory data element 12 stored in the second memory area 22 is equal or larger than the first data element 11 stored in the first memory area 21.

In some examples the second number of comparators may also comprise a comparator that is coupled to the first memory area 21 and to the second memory area 22. Here, the respective comparator may adopt or duplicate the function of the comparator 41 of the first number of comparators 41, 42, 43, 44. In some examples, the second number of comparators may comprise an amount of comparators n-1, wherein n reflects the amount of comparators of the first number of comparators.

Likewise, the third comparison counter 33 would be operable to count the number of matchings of all comparisons of the third data element 13 stored in the third memory area 23 with all other data elements stored in other memory areas.

The electronic circuit 5 further comprises a selecting arrangement 50 comprising an array 55 of numerous selecting comparators 51, 52, 53, 54. Here and as indicated in Fig. 1, a first input of each selecting comparator 51, 52, 53, 54 is connected to a selecting input 56, which is controlled or connected to the controller 80 as a sort_index as illustrated in Fig. 4.

After conducting a complete comparison between all data elements 11, 12, 13, 14 of the data array 10 stored in the memory array 20 the counter values of the comparison counters 31, 32, 33, 34 will be indicative of a ranking of the size of the individual data elements 11, 12, 13, 14 as defined by the predefined comparison condition. Now and by incrementally providing an input value at the selecting input 56 from the controller 80 a particular comparison counter 31, 32, 33 will be selected in accordance to its counter value by the respective selecting comparators 51, 52, 53, 54. Furthermore, a single sort request on input 56, such as the highest value, lowest value or median value can easily be output on the data output 70.

The output of the individual selecting comparators 51, 52, 53, 54 is connected to individual logic gates 61, 62, 63, 64 of an array 60 of these logic gates 61, 62, 63, 64. The logic gates 61, 62, 63, 64 comprise a first gate input each of which being connected to an individual selecting comparator 51, 52, 53, 54. A second gate input of each logic gate 61, 62, 63, 64 is connected to one of the memory areas 21, 22, 23, 24. In this way and when the output of a selecting comparator 51, 52, 53, 54 is at a logic 1, a single, respective and hence an associated data area and hence a respective data element 11, 12, 13, 14 is selected for readout.

The input at the second gate input of the respective logic gate 61, 62, 63, 64 is then parsed or relayed to the data output 70 of the electronic circuit 5, which is connected to the controller 80 as shown in Fig. 4 as data_out. The data output 70 is connected to the array 60 of logic gates 61, 62, 63, 64 via a multiple OR gate 72. In this way, any one of the data values provided at the output of the individual logic gates 61, 62, 63, 64 can be transmitted and guided through to the data output 70.

In the block diagram of Fig. 4 the electronic circuit 5 for sorting the data elements 11, 12, 13, 14 is illustrated in connection with the controller 80. Here, the electronic circuit 5 is represented by numerous logic units, namely by the comparator arrangement 40, the indexing array 30 and by the selecting arrangement 50. In effect and by way of the comparator arrangement 40 all data elements 11, 12, 13, 14 stored in the memory array 20 can be mutually compared. Based on the comparison there is defined an indexing with the indexing array 30. The counter values of the individual comparison counters 31, 32, 33, 34 will be assigned to one data element 11, 12, 13, 14. By way of the selecting arrangement 50, the data elements 11, 12, 13, 14 can be located in a sorted manner on the basis of the associated counter values of the comparison counters 31, 32, 33, 34.

The controller 80 comprises a clock and controls the operation of the indexing array 30 with a clock signal "clock". Moreover, the controller 80 is configured to reset the indexing array 30 via a reset line "reset".

The controller 80 is further configured to write data into the memory array 20 via the "data_in" connection. There is further provided a write enable signal "write_en", by way of which the data elements memory areas 21, 22, 23, 24 can be overwritten or protected against erasure.

Via the "sort_index", which is equal to the selecting input 56 the controller 80 may request a sorted readout of the memory array 20, which is then provided via the data output 70 "data_out".

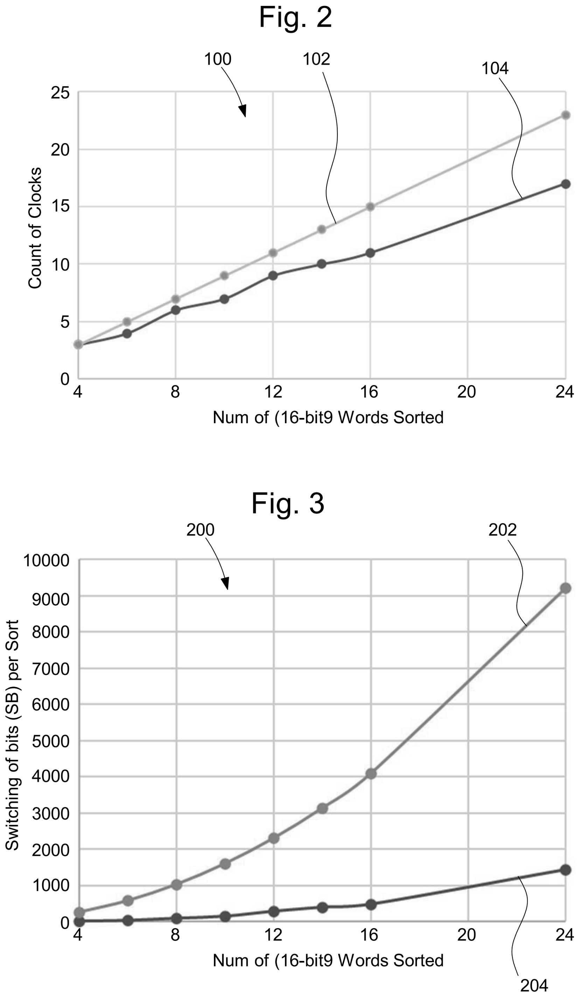

In the graph 100 according to Fig. 2 a count of clocks is illustrated over a number of words to be sorted. Here, the graph 102 is a comparative example of a bubble sort algorithm. The graph 104 reflects the performance of sorting routine and the method of sorting according to the present invention. The clocks per sort operation can be improved by using the invention solution versus a bubble sort algorithm. A bubble sort requires n-1 clocks for n words in the array to shift a possible high word from a low position to a high sorted position. The method of sorting according to the present invention supports less clocks per sort when the number of hardware comparators is close to the square root of the number of comparisons required. This clock count can be reduced further if the number of hardware comparators is increased to perform more than the square root of comparisons per each clock cycle. Thus an area vs. clock count tradeoff can be chosen using the presently proposed sorting algorithm. By way of a comparative example, a bubble sort routine would require n/2 comparators, versus the presently proposed sorting routine, which may be implemented with (n*(n-1))/2 comparisons, which is then divided by the number of clocks.

In the graph 200 of Fig. 3 a calculation of switching bit (SB) activity versus various depths of an array of data elements to be sorted is demonstrated. Thus, the number of switching bits per completion of a sorting routine is illustrated over the number of 16-bit words to be sorted. Here, the graph 202 reflects that characteristics of a comparatively bubble sort algorithm. The graph 204 reflects the sorting method according to the present invention. It is immediately apparent, that with an increasing number of words to be sorted the switching of bits per sort is drastically reduced compared to the comparatively bubble sort algorithm. As shown in Figure 3, the bit switching activity, thus the power consumption of the presently proposed solution is significantly lower than a bubble-sorting algorithm. For example, an 8-deep array of 16-bit words would require up to 1024 bit switches in a bubble sort, and only 90 bit switches for a complete sort operation according to the present invention. hence, the present a proposed sort algorithm may only consume 8.8% of the power required for a comparative bubble sort operation.

For instance, and with n words in the data array 10, a number of data comparisons must be supported such that each element is compared with each other element and the "win" result counted. The results of each compare event shall effect the cmp_cnt value of one of the two associated cmp_cnt locations. The total comparisons per sort is the sum of the numbers 1 to n-1, which is (n-1)(n)/2. For example, 8 words in the array require ((8-1)*8)/2 = 28 comparisons. One optimized logic solution for this example would be to produce ROUNDUP(√28) = 6 comparisons at each of 5 clock events.

Following the required number of clocks and comparison events, the cmp_cnt array shall contain a summation of the number of successful comparisons each data word has achieved. Therefore, the highest value in a cmp_cnt field corresponds to the highest data value in the data word array, while a 0 value in the cmp_cnt field indicates the lowest data value in the data word array. Alternatively, the number of unsuccessful comparisons could be summed into the cmp_cnt array fields, where a 0 would indicate the highest data word value.

The additional storage bits, cmp_cnt[n][width-1:0], required to complete the sort calculation increases as the word count (n) increases, per the formula n x ROUNDUP(log(n)/log(2)). Here, the percentage of total storage register bits used for cmp_cnt decreases as the data word width increases. Also, in data-pipelined designs, these cmp_cnt bits may be stored in a time-multiplexed storage location which is used for other purposes after moving the sorted data deeper in the pipeline, thus relieving the area increase.

In the flowchart according to Fig. 5 the method of sorting data elements 11, 12, 13, 14 provided in a memory array 20 is schematically illustrated. This method comprises the steps of:
- assigning a comparison counter 31, 32, 33, 34 to each data element 11, 12, 13, 14;
- comparing a data element 11,12, 13, 14 stored in the corresponding memory area 21, 22, 23 with all further data elements 11, 12, 13, 14 stored in the number of corresponding memory areas 21, 22, 23, during this comparison, the data elements 11,12, 13, 14 of the memory array 20 are not relocated but instead a comparatively small footprint of switching bits is applied by using the comparison counter index number which addresses the data elements 11,12, 13, 14 in an ascending or descending order;
- incrementing a counter value of the comparison counter 31, 32, 33, 34 of the data element 11,12, 13, 14 which is compared to the further data elements 11, 12, 13, 14, if the comparison of this data element 11, 12, 13, 14 with any one of these further data elements 11, 12, 13, 14 matches a predefined comparison condition, else incrementing the comparison counter of the other data element,
- concurrently or sequentially comparing further data elements 11, 12, 13, 14 with all subsequent data elements 11, 12, 13, 14 and incrementing each associated counter value upon the success of the comparisons, in this way the counter value of the comparison counters 31, 32, 33, 34 of the respective data elements 11, 12, 13, 14 reflects the size of each data element of the memory array 20 without the necessity to actually swap the memory area(s), in which respective data elements are actually stored, and
- sorting the data elements 11, 12, 13, 14 on the basis of the comparison counters 31, 32, 33, 34.

As visible in figure 5, in a first step 300 a comparison counter is assigned to each data element. Hence, a first comparison counter 31 is assigned to the first data element 11, a second comparison counter 32 is assigned to the second data element 12, and so on. In a subsequent step 302 all data elements 11, 12, 13, 14 are compared with all other data elements 12, 13, 14 by making use of the comparator arrangement 40. During or concurrent with the comparison a counter value of the comparison counter 31, 32, 33, 34 is incremented every time the associated data element 11, 12, 13, 14 fulfills the predefined comparison condition. In this way, the indexing array 30 of comparison counters 31, 32, 33, 34 contains a number of counter values that reflect the ranking of the associated data elements 11, 12, 13, 14 in view of the predefined comparison condition.

In a further step 304 the data elements 11, 12, 13, 14 are sorted on the basis of the comparison counters 31, 32, 33, 34. Here and by way of the selecting arrangement 50, the individual data elements 11, 12, 13, 14 are retrieved or read from the respective memory areas 21, 22, 23, 24 on the basis of the associated comparison counters either in an ascending or descending order. Furthermore, a single sort request on input 56, such as the highest value, lowest value or median value can easily be output on the data output 70.

### Nomenclature

- 5: electronic circuit
- 10: data array
- 11: data element
- 12: data element
- 13: data element
- 14: data element
- 20: memory array
- 21: memory area
- 22: memory area
- 23: memory area
- 24: memory area
- 30: indexing array
- 31: comparison counter
- 32: comparison counter
- 33: comparison counter
- 34: comparison counter
- 40: comparator arrangement
- 41: comparator
- 42: comparator
- 43: comparator
- 44: comparator
- 45: adder arrangement
- 50: selecting arrangement
- 51: selecting comparator
- 52: selecting comparator
- 53: selecting comparator
- 54: selecting comparator
- 55: array
- 56: selecting input
- 60: array
- 61: logic gate
- 62: logic gate
- 63: logic gate
- 64: logic gate
- 70: data output
- 72: logic OR gate
- 80: controller

## Claims

1. A method of sorting data elements (11, 12, 13, 14) provided in a memory array (20), wherein the memory array (20) comprises a number of memory areas (21, 22, 23, 24), each of which configured to store a data element (11, 12, 13, 14), the method comprises the steps of:
- assigning a comparison counter (31, 32, 33, 34) to each data element (11, 12, 13, 14),
- comparing a first data element (11) stored in a first memory area (21) with all further data elements (12, 13, 14) stored in the number of memory areas (22, 23),
- incrementing a counter value of the comparison counter (31) of the first data element (11) if the comparison of the first data element (11) with any one of the further data elements (12, 13, 14) matches a predefined comparison condition, else incrementing the comparison counter of the other data element,
- concurrently or sequentially comparing further data elements (11, 12, 13, 14) with all subsequent data elements (11, 12, 13, 14), and incrementing each associated counter value upon the success of the comparisons, in this way the counter value of all comparison counters (31, 32, 33, 34) of the respective data elements (11, 12, 13, 14) reflects the size of each data element of the memory array (20) without the necessity to actually swap the memory area(s), in which respective data elements are actually stored, and
- sorting the data elements (11, 12, 13, 14) on the basis of the comparison counters (31, 32, 33, 34).

2. The method according to claim 1, further comprising the steps of:
- comparing a second data element (12) stored in a second memory area (22) with all remaining data elements (13, 14) and
- incrementing the counter value of the comparison counter (32) of the second data element (12) if the comparison of the second data element (12) with any one of the remaining data elements (13, 14) matches the predefined comparison condition.

3. The method according to claim 1 or 2, further comprising the steps of:
- comparing a third data element (13) and all further data elements (14) stored in a third memory area (23) or further memory areas (24) with all remaining data elements (14), and
- incrementing the counter value of the comparison counter (33) of the third data element (13) if the comparison of the third data element (13) with any one of the remaining other data elements (14) matches the predefined comparison condition.

4. The method according to any one of the preceding claims, wherein before the data elements (11, 12, 13, 14) are selected in an ascending or descending order on the basis of the comparison counters (31, 32, 33, 34):
- the data elements (11, 12, 13, 14) of all memory areas (21, 22, 23, 24) are mutually compared, and
- the counter values of the comparison counters (31, 32, 33, 34) associated to the data elements (11, 12, 13, 14) are incremented when the predefined comparison condition has been met.

5. The method according to any one of the preceding claims, wherein sorting the data elements (11, 12, 13, 14) on the basis of the associated comparison counter (31, 32, 33, 34) includes selecting the comparison counters (31, 32, 33, 34) in an ascending or descending order of their respective counter value.

6. The method according to any one of the preceding claims, wherein the predefined comparison condition is fulfilled when the first data element (11) is larger than another data element (12, 13, 14).

7. The method according to any one of the preceding claims, wherein numerous data elements (11, 12, 13, 14) stored in numerous memory areas (21, 22, 23, 24) are mutually compared during a clock cycle.

8. The method according to one of the preceding claims, wherein during the sort operation the data elements (11, 12, 13, 14) of the memory array (20) are not relocated but instead a comparatively small footprint of switching bits is applied by changing the comparison counter index number which addresses the data elements (11, 12, 13, 14) in an ascending or descending order.

9. The method according to one of the preceding claims, wherein during the steps of concurrently or sequentially comparing further data elements (11, 12, 13, 14) with all subsequent data elements (11, 12, 13, 14), and incrementing each associated counter value upon the success of the comparisons, the counter value of all comparison counters (31, 32, 33, 34) of the respective data elements (11, 12, 13, 14) reflects the size of each data element of the memory array (20) without the necessity to actually swap the memory area(s), in which respective data elements are actually store.

10. An electronic circuit (5) for sorting data elements (11, 12, 13, 14), the electronic circuit (5) comprising:
- a memory array (20) comprising a number of memory areas (21, 22, 23, 24), wherein each of the memory areas (21, 22, 23, 24) is configured to store a data element (11, 12, 13, 14),
- an indexing array (30) of comparison counters (31, 32, 33, 34), wherein each comparison counter (31, 32, 33, 34) is assigned to a data element (11, 12, 13, 14),
- a comparator arrangement (40) coupled to the memory array (20), coupled to the indexing array (30) of comparison counters (31, 32, 33, 34) and operable to compare each one of the data elements (11) with all remaining data elements (12, 13, 14),
- a selecting arrangement (50) coupled to the indexing array (30) of comparison counters (31, 32, 33, 34), coupled to the memory array (20) and operable to sort the data elements (11, 12, 13, 14) on the basis of the comparison counters (31, 32, 33, 34).

11. The electronic circuit (5) according to claim 10, wherein the comparator arrangement (40) comprises a number of comparators (41, 42, 43) each of which connected to the first memory area (21) and connected to one of the further memory areas (22, 23, 24).

12. The electronic circuit (5) according to claim 10 or 11, wherein the comparison counters (31, 32, 33, 34) are coupled to the comparator arrangement (40) via an adding arrangement (45).

13. The electronic circuit (5) according to any one of the preceding claims 10 to 12, wherein the selecting arrangement (50) comprises an array (55) of selecting comparators (51, 52, 53, 54) each one which:
- being connected to one of the comparison counters (31, 32, 33, 34) and
- being connected to a selecting input (56).

14. The electronic circuit (5) according to claim 13, wherein the selecting arrangement (50) comprises an array (60) of logic gates (61, 62, 63, 64) each of which comprising a first gate input and a second gate input,
- wherein the first gate input of each logic gate (61, 62, 63, 64) is connected to an output of one of the selecting comparators (51, 52, 53, 54), and
- wherein the second gate input of each logic gate (61, 62, 63, 64) connected to one of the memory areas (21, 22, 23, 24) of the memory array (20).

15. The electronic circuit (5) according to claim 14, wherein an output of each one of the logic gates (61, 62, 63, 64) is connected to a sorted data output (70) via a logic gate (72).

16. A computer program product comprising a non-transitory computer readable storage medium having computer readable instructions that are executable by a electronic circuit and more particularly by its processing unit in a sequence to accomplish a sorting method modeled by the electronic circuit description (5), the electronic circuit description (5) comprising:
- a memory array (20) comprising a number of memory areas (21, 22, 23, 24) each of which being configured to store a data element (11, 12, 13, 14),
- an indexing array (30) of comparison counters (31, 32, 33, 34),
wherein when executed by the processing unit the computer readable instructions cause the processing unit:
- to assign a comparison counter (31, 32, 33, 34) to each data element (11, 12, 13, 14),
- to compare a first data element (11) stored in a first memory area (21)with all further data elements (12, 13, 14) stored in the number of memory areas (22, 23),
- to incrementing a counter value of the comparison counter (31) of the first data element (11) if the comparison of the first data element (11) with any one of the further data elements (12, 13, 14) matches a predefined comparison condition, else incrementing the comparison counter of the other data element,
- concurrently or sequentially comparing further data elements (12, 13...) with all subsequent data elements (13, 14...), and incrementing each associated counter value upon the success of the comparisons, in this way the counter value of all comparison counters (31, 32, 33, 34) of the respective data elements (11, 12, 13, 14) reflects the size of each data element of the memory array (20) without the necessity to actually swap the memory area(s), in which respective data elements are actually stored, and
- to sort the data elements (11, 12, 13, 14) on the basis of the comparison counters (31, 32, 33, 34).

17. The computer program product according to claim 16, wherein when executed by the electronic circuit more particularly by its processing unit the computer readable instructions cause the processing unit to increment each remaining counter value of the comparison counter (32, 33, 34) as each comparison of the associated data elements (12, 13, 14) with all other data elements (13, 14) matches the predefined comparison condition.

18. The computer program product according to claim 16 or 17, wherein when the computer readable instructions are executed by the electronic circuit, more particularly by its processing unit, according to any one of the preceding claims 10-15, the computer readable instructions cause the processing unit to conduct the method according to any one of the preceding claims 1-9.
